# EUROPEAN PATENT SPECIFICATION

(11) **EP 0 739 193 B1**
(45) Date of publication and mention of the grant of the patent: **08.12.1999**
(21) Application number: 95906582.2
(22) Date of filing: 12.01.1995
(51) Int. Cl.: A61G 3/06, B60P 1/44

(54) **EQUIPMENT FOR ELEVATING OF WHEELCHAIRS INTO AND OUT OF VEHICLES**
HEBESYSTEM ZUM AUF- UND ABLADEN EINES ROLLSTUHLS IN EIN FAHRZEUG
SYSTEME DE LEVAGE POUR CHARGER ET DECHARGER UN FAUTEUIL ROULANT DANS UN VEHICULE

(30) Priority: 12.01.1994 SE 9400058
(43) Date of publication of application: 30.10.1996
(73) Proprietor: Flygt, Biör, 740 22 Bälinge (SE)
(72) Inventor: Flygt, Biör, 740 22 Bälinge (SE)
(74) Representative: Bjellman, Lennart Olov Henrik
(86) International application number: SE9500021
(87) International publication number: WO9519158

(56) References cited:
- EP-A- 0 114 134
- DE-A- 3 333 927
- FR-A- 2 528 774
- US-A- 4 907 936

## Description

The present invention refers to lifting devices for vehicles, especially for lifting persons in wheel chairs in and out of vehicles, where it is possible for the person to remain in the wheel chair placed in the lifting device during the transportation in the vehicle.

Since it is difficult to provide special vehicles to transport handicapped persons and persons in wheel chairs, the transportation business, e.g. taxis, has sought other solutions in order to facilitate for handicapped persons to get in and out of vehicles. The most common solution is different kinds of ramps that the driver has to carry out and place at his best so that the handicapped person or the person carried in a wheel chair can be helped in and out of the vehicle. Such ramps tend to be heavy, difficult to handle and they often get dirty in addition to taking up space in the vehicle when not in use and reducing the maximum loading capacity of the vehicle.

Although such ramps are relatively inexpensive and simple facilities, their disadvantages are troublesome for the driver who usually has to manage them alone in addition to aiding the handicapped person up and down the ramp and in and out of the vehicle, and many times with all their strength push a wheel chair up the ramp and then manage to take it down the ramp and keeping it from going off by itself. Furthermore, the door opening and the inside height of the vehicle often causes trouble for the handicapped person as well as for the driver, or the assistant, in the case where wheel chairs can be taken on board the vehicle with persons sitting in them. Such an arrangement also needs space for the wheel chair and safety attachments. Accordingly, it either has to be a special vehicle or a vehicle that can be modified, i.e. the seats are to be removable or mountable depending on the use of the vehicle. Such changes are time consuming and therefore costly.

To solve these problems, certain lifting devices have been constructed for bigger vehicles such as vans, to facilitate for handicapped persons and persons in wheel chairs getting in and out of vehicles, even remaining in a wheel chair. One of these known lifting devices includes a frame mountable under the vehicle carrying the actual lift. The lift, usually a small platform, can be pulled by motors out from a retracted position under the vehicle to an extended position outside the side of the vehicle. In the latter position the lift can be raised and lowered between the ground level and the floor level of the vehicle.

Such lifting devices have the advantage of being universal and accordingly, easy to mount in practically any vehicle, as long as the vehicle is robust enough and have enough space between the ground and the vehicle so that the lifting device in retracted position not will risk hitting the ground during the drive. However, these lifts have certain disadvantages. They take up lot of space at the side of the vehicle, the door opening and the inside height of the vehicle have to be big enough so that e.g. a person in a wheel chair does not hit the head not only when passing in or out of the vehicle but during the drive as well, and as the lifting device is placed under the vehicle, it is exposed for dust, dirt, water, salt etc from the road, which can make it unusable in a short time if it is not constantly maintained. It is also necessary that the vehicle either has to have a specific place for one or more wheel chairs, and thereby is a special vehicle, or a vehicle that can be modified.

To the extent the awareness of the situation of the handicapped persons is growing as well as their demands on transportation is growing there are also raising increasing demands on safe and simple transportation. To these facts you also have to add the fact that the working environment and safety for the drivers also have to be enhanced all the time. Therefore, today you cannot demand that the drivers should have to carry ramps and aid the handicapped in and out of the vehicle without any kind of help.

Another wish is that an average bigger car, e.g. a van, could be used for both conventional transportations and transportations of persons sitting in wheel chairs.

From the French patent document no. 2,528,774 there is known a lift for vehicles where a person in a wheel chair boards through the back of the vehicle. However, this lift is extremely complicated, it needs a considerable amount of space behind the vehicle since the lifting platform is extending behind the vehicle in loading position, and the vehicle needs so great adjustments that it has to be considered a special vehicle.

From the U.S. patent no 4,907,936 there is also known a lift for handicapped persons, which is arranged in connection to the vehicle's back door. However, also this one has such a complicated construction that the vehicle has to be considered a special vehicle, and there has to be quite a lot of space behind the vehicle since the lifting platform is extending behind the vehicle in loading position.

From EP-A-0 114 134 representing the nearest prior art, there is known a wheel chair lift to be mounted in a car or van in a way similar to the mounting of the one of the present invention. However, the presentation of the known lift is so vague that it is not possible to realize the real function thereof. It is apparent that the platform is suspended in wires and guided on two opposite sides. Such a structure appears to be too unstable to support persons carried in wheel chairs during road transports. Further, the structure lacks means for locking the platform on different, optional levels.

The present invention aims to remove the problems mentioned above. This aim is accomplished by a lifting device primarely for taking persons in wheel chairs on board a vehicle. The lifting device includes a platform which is raisable and lowerable in a substantially vertical direction between ground level and a transportation level and which is placed in a cut out in the floor of the vehicle, the cut out being extended from the rear edge at the back door and inwards. The platform is primarely of the same shape and size as the cut out and adapted to be moved vertically up and down in this cut out. The raising and lowering of the platform is performed by an arrangement of motor driven infinite chains, one on each side of the platform. The chains are provided to run around a set of sprockets so that two sections of each of the chains run mainly in parallel and in the same direction at either end of a wall arranged in the normal driving direction of the vehicle. Drivers are liked to these chain sections and to the platform whereby the platform moves up and down by the shifting of the chain.

The invention is further described as follows with references to the attached drawing on which
- FIG. 1: is a schematic, partly broken perspectiv view of the rear part of a vehicle equipped with a lifting device according to the invention;
- FIG. 2: is a schematic view from the back of the vehicle shown in fig. 1, where the lift is shown partly in the upper position and partly in the lower position;
- FIG.3: is a schematic partly broken section taken along the line A-A in fig.2 through the rear part of the vehicle in fig. 1 with the lift in the lower position;
- FIG.4: is a schematic partly broken section taken along the line C-C in fig. 5 showing the driving mechanism of the lift; and
- FIG 5.: is a schematic, partly broken section taken along the line B-B in fig. 4.

A car 1, a so called van for between 6 and 8 passengers, has a back door or lid 2, which in a conventional way allows the opening of the car's 1 whole rear end, which means that the entrance opening is big. In the floor 3 inside the back door 2 there is a substantially rectangular cut out 4 made from the end edge of the floor at the back door and forward. Hence, the car's 1 floor 3 is in this manner U- shaped around the cut out 4, as shown in the Figures.

A lifting platform 5, substantially of the same shape and size as the cut out 4, is placed in the cut out and can be raised and lowered. The platform 5 has a ramp 6 which limits the back side of the platform 5 and, when lowered, facilitates pushing a wheel chair onto the platform 5. To keep the wheel chair on the platform during the drive of the vehicle 1, there are common attachments, not shown, in connection to this. To protect from damages and incoming dirt the platform 5 is surrounded on the sides and on the front by upwardly extending walls 7-9, which follows the platform's 5 movements.

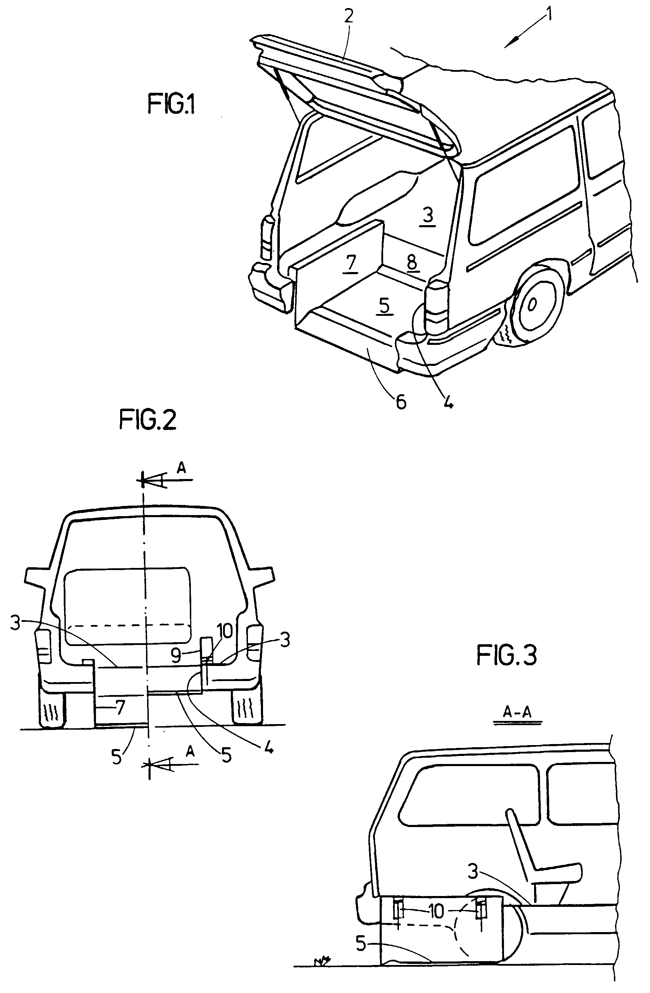

In the embodiment shown in fig. 1-3 hydraulic motors 10 are placed in a space outside the platform's side walls 7, 9 and inserted between the upper edges of the side walls 7, 9 and parts not shown, in connection to the floor 3. This driving arrangement takes up a small amount of space both vertically and horisontally, which contributes to the fact that the lifting device according to this invention hardly uses any of the usable space in the vehicle. By activating these motors 10 the platform 5 is moved up and down vertically without taking up any space beside or behind the vehicle.

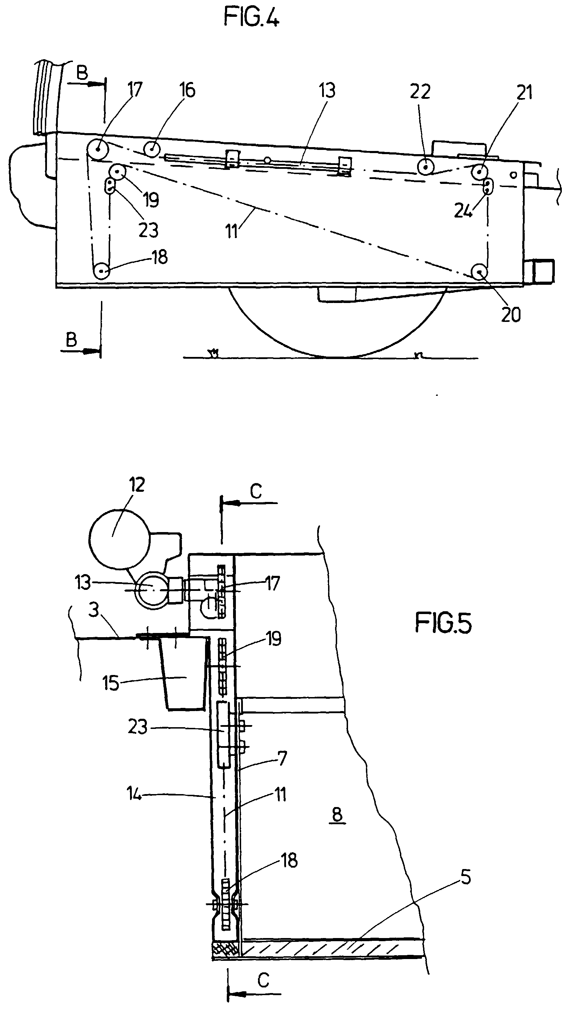

In another embodiment, shown in Figs. 4 and 5, chains 11 and sprockets are used to lift the platform 5 up and down, in which rotating electrical motors 12 can be used for the operation via e.g. a ball screw 13. In this way there is no need to install any special hydralic equipment, if such cannot be accessed from the beginning, but the vehicles conventional electrical system can be used. Also, this driving arrangement is of a type requiring very little space and is easily positioned at the platform's 5 side walls 7-9. In this manner there is a driving arrangement with a motor 12 on either side of the platform 5. These are identical and preferable mirrored to each other. In figs. 4 and 5 the platform 5 is shown in the upper end position.

A box shaped wall 14 reaching down from the floor 3 in the vehicle, one on either side of the platform 5 and its side walls 7, 9, a beam 15 reinforcing the floor 3 and the box shaped wall 14. A chain 11 runs in the box shaped wall 14 around different deflecting sprockets as will be described.

The chain 11 is principally infinite and is fastened at one point to the screw 13. From this point the chain 11 runs over a first sprocket 16, which keeps the chain 11 at the same level as the screw 13, to second sprocket 17, which on one hand lifts the chain 11 to a level higher than the one at the screw 13, from where the chain continues substantially straight downwards to a third sprocket 18. From here the chain continues substantially straight upwards to a fourth sprocket 19, placed directly beneath the chain's 11 run between the sprockets 16 and 17. From the sprocket 19 the chain 11 is extended downwardly diagonally across the wall to a fifth sprocket 20 at its forward lower edge and from there substantially straight upwards to a sixth sprocket 21 and from there via a seventh sprocket 22 back to the fixing point to the screw 13. Like the sprocket 16 the sprocket 22 serves to keep the chain 11 at the same level as the screw 13.

At the section between the sprockets 18 and 19 placed at the rear end of the wall 14 seen in the vehicle's normal driving direction, there is a driver 23 fixed to the chain 11. A corresponding driver 24 is fixed to the chain 11 at the section between the sprockets 20 and 21 at the front of the wall 14 seen in the vehicle's normal driving direction. The drivers 23 and 24, placed to run in parallel, are in turn attached to the wall 7 and with that to the platform 5. There is a corresponding arrangement at the opposite wall 9. The drivers 23 and 24 runs in tracks (not shown) in that wall of the box shaped wall 14, faced against the wall 7 and 9 respectively. Also, the construction includes position switches (not shown) which constraint the chain's 11 travelling distance and with that, the raising and lowering of the platform 5.

At supply of power to the motors 12 the chains 11 shift on both sides and the drivers 23, 24 raise or lower the platform 5 when it is moved up or down. The whole lifting mechanism needs a very small amount of space in this design, which provides lot of space within the vehicle at the side of the lifting device.

According to the regulations, the distance between the floor and the ceiling shall be at least 145 centimeters at that position in the vehicle where a wheel chair can be placed with a person sitting therein. This means that the upper level of the platform 5 not necessarily coincides with the floor 3, but depending on the type of vehicle, this can be adjusted in dependance of this measurement. Since the lifting device is placed inside the rear edge of the vehicle, and in no position extending outside there, the height of the door opening is not essential since the person in the wheel chair or the handicapped person is inside the door opening when the platform 5 is raised up.

In the shown embodiment the lifting device is placed behind the rear axel of the vehicle in the space usually used for luggage. If there are seats in or close to this space, these are arranged to be removed if necessary. The bottom of the platform 5 is in such a level that, when the platform is in transportation level, there is no risk that the platform or parts of it touch the ground during the driving of the vehicle. For the back door 2 or corresponding to be closed, the platform 5 must be in transportation level, i.e. over a lowest allowed level. At the same time as the back door 2 or corresponding is closed, the platform 5 is locked in a set transportation level.

The lifting device may have different shape and design, depending on type of vehicle. Also the raising and lowering of the platform 5 can be carried out with different, suitable types of motors, as well as directly by the use of linkage system. Instead of fixed walls 7-9 some sort of bellows or a telescoping wall can be used.

The back door 2 covers the lifting device in closed position and is equipped with such details as parts of the bumper, so when the back door is closed the vehicle has a normal, acceptable look. To be lowered the door 2 has to be opened. For the invention it does not matter wether the door 2 is of the type shown with hinges in the upper side to swing upwards or of simple or double type with the hinges on one or both sides.

Even if the lifting device can be used for lifting almost anything, it is primarely intended for use in connection with transporting handicapped persons and then, especially persons in wheel chairs. Since the platform 5 does not extend outside the vehicle 1 there is no need for a lot of space when a person in a wheel chair is taken on board the vehicle. When the door 2 is open and the platform 5 is in the lower position, i.e. resting against the ground, the wheel chair can without too much effort be pushed onto the platform 5. When the wheel chair is being pushed onto the platform the distance to the upper edge of the door opening is so big so there is no risk for the person in the wheel chair to hit that edge. After raising the platform 5 and securing the wheel chair, the door 2 can be closed and the transportation can be carried out. There has not been any strenuous moments for the driver, but the whole operation has basically been performed by pressing buttons.

By using a lifting device according to the invention a generally available transportation vehicle can be used in a conventional way as well as for transportation of handicapped persons, which gives such a vehicle a higher usability than what is common today.

The inital aim has been achieved by the present invention. However, a professional realises that the lifting device, according to the invention, easily can be adapted to different kinds of vehicles without diverging from the protection range specified by the attached patent claims.

## Claims

1. Lifting device for vehicles primarely for taking persons in wheel chairs on board of the vehicle (1) which lifting device includes a platform (5) which is raisable and lowerable in a substantially vertical direction between ground level and a transportation level and which is placed in a cut out (4) in the floor (3) of the vehicle (1) extended from the rear edge at the back door (2) and inwards, the platform (5) primarely being of the same shape and size as the cut out (4) and adapted to be moved vertically up and down in this cut out (4), the raising and lowering of the platform (5) being performed by an arrangement of motor driven chains, **characterized by** the fact that an infinite chain (11), one on each side of the platform (5), is provided to run around a set of sprockets (16-22) so that two sections of each of the chains (11) run mainly in parallel and in the same direction at either end of a wall (14) arranged in the normal driving direction of the vehicle (1), and that drivers (23, 24) are fixed to these chain sections and to the platform (5), whereby the platform (5) moves up and down by the shifting of the chain (11).

2. Lifting device according to claim 1, **characterized by** the fact that the wall (14) is box shaped and contains the chain (11) and the sprockets (16-22), such a box shaped wall (14) being installed on either opposite side of the platform (5).

3. Lifting device according to claim 1 or 2, **characterized by** the fact that the transportation level of the platform (5) is adjustable according to the distance between the ceiling of the vehicle (1) and the head height of the person in the wheel chair.

4. Lifting device according to any of preceding claims, **characterized by** the fact that the back door (2) of the vehicle (1) is closable only when the platform (5) is over a minimum level and that, when closed, the platform (5) is locked in that position.

## Patentansprüche

1. Hubvorrichtung für Fahrzeuge, primär um Personen in Rollstühlen an Bord des Fahrzeugs (1) zu nehmen, mit einer Plattform (5), welche in im wesentlichen vertikaler Richtung zwischen einer Bodenebene und einer Transportierebene anhebbar und absenkbar ist und in einem Ausschnitt (4) des Fahrzeugbodens (3) angeordnet ist, welcher sich von der rückwärtigen Kante der Hecktür (2) und nach innen erstreckt, wobei die Plattform (5) primär dieselbe Form und Größe wie der Ausschnitt (4) hat und in diesem Ausschnitt vertikal auf- und abwärts bewegt werden kann, wobei ferner das Anheben und Absenken der Plattform (5) durch eine Anordnung von motorgetriebenen Ketten durchgeführt wird, dadurch gekennzeichnet, daß auf jeder Seite der Plattform (5) eine endlose Kette (11) vorgesehen ist, die derart um einen Satz von Kettenrädern (16-22) herumläuft, daß zwei Abschnitte jeder der Ketten (11) hauptsächlich parallel und in derselben Richtung an den beiden Enden einer in der normalen Fahrtrichtung des Fahrzeugs (1) verlaufenden Wand (14) laufen, und daß an diesen Kettenabschnitten und an der Plattform (5) Antriebselemente (23, 24) befestigt sind, so daß sich die Plattform (5) bei der Verschiebung der Kette (11) auf- und abwärts bewegt.

2. Hubvorrichtung nach Anspruch 1 dadurch gekennzeichnet, daß die Wand (14) kastenförmig ist und die Kette (11) sowie die Kettenräder (16 bis 22) enthält, und daß beiderseits der Plattform (5) eine solche kastenförmige Wand (16) montiert ist.

3. Hubvorrichtung nach Anspruch 1 oder 2, dadurch gekennzeichnet, daß die Transportierebene der Plattform (5) einstellbar ist entsprechend dem Abstand zwischen dem Dach des Fahrzeugs (1) und der Kopfhöhe der Person im Rollstuhl.

4. Hubvorrichtung nach einem der vorstehenden Ansprüche dadurch gekennzeichnet, daß die Hecktür (2) des Fahrzeugs (1) nur dann geschlossen werden kann, wenn die Plattform (5) sich oberhalb einer Minimumebene befindet, und daß bei geschlossener Hecktür die Plattform (5) in dieser Position verriegelt ist.

## Revendications

1. Dispositif de levage pour véhicules, principalement pour prendre des personnes en fauteuil roulant à bord du véhicule (1), ce dispositif de levage comprenant une plate-forme (5) qu'on peut faire monter et descendre dans une direction sensiblement verticale entre le niveau du sol et un niveau de transport et qui est placée dans une découpe (4) du plancher (3) du véhicule (1) s'étendant à partir du bord arrière à l'endroit de la porte arrière (2) et vers l'intérieur, la plate-forme (5) ayant sensiblement la même forme et la même dimension que la découpe (4) et pouvant être déplacée verticalement vers le haut et le bas dans cette découpe (4), la montée et la descente de la plate-forme (5) étant effectuées par un dispositif de chaînes entraînées par moteur, caractérisé en ce qu'une chaîne sans fin (11), une de chaque côté de la plate-forme (5), est prévue pour passer autour d'un ensemble de pignons (16-22) de sorte que deux parties de chacune des chaînes (11) s'étendent sensiblement en parallèle et dans la même direction à chaque extrémité d'une paroi (14) agencée dans la direction normale de marche du véhicule (1), et en ce que des taquets d'entraînement (23,24) sont fixés à ces parties de chaîne et à la plate-forme (5) afin que la plate-forme (5) soit déplacée vers le haut et le bas par le mouvement de la chaîne (11).

2. Dispositif de levage selon la revendication 1, caractérisé en ce que la paroi (14) est en forme de caisson et contient la chaîne (11) et les pignons (16-22), une telle paroi en forme de caisson (14) étant installée de part et d'autre de la plate-forme (5).

3. Dispositif de levage selon la revendication 1 ou 2, caractérisé en ce que le niveau de transport de la plate-forme (5) est réglable en fonction de la distance entre le plafond du véhicule (1) et la hauteur de la tête de la personne dans le fauteuil roulant.

4. Dispositif de levage selon une quelconque des revendications précédentes, caractérisé en ce que la porte arrière (2) du véhicule (1) peut être fermée seulement lorsque la plate-forme (5) est au-dessus d'un niveau minimal, et en ce que, lorsque cette porte est fermée, la plate-forme (5) est verrouillée dans cette position.
